# EUROPÄISCHE PATENTSCHRIFT

(11) **EP 2 560 899 B1**
(45) Veröffentlichungstag und Bekanntmachung des Hinweises auf die Patenterteilung: **02.08.2017**
(21) Anmeldenummer: 11717210.6
(22) Anmeldetag: 15.04.2011
(51) Int. Cl.: B65G 1/137, B65G 47/51

(54) **KOMMISSIONIERANLAGE UND VERFAHREN ZUM KOMMISSIONIEREN VON PACKSTÜCKEN**
LOADING SYSTEM AND METHOD FOR LOADING PACKAGED ITEMS
INSTALLATION DE PRÉPARATION DE COMMANDES ET PROCÉDÉ PERMETTANT DE PRÉPARER DES PAQUETS POUR DES COMMANDES

(30) Priorität: 19.04.2010 DE 102010015414
(43) Veröffentlichungstag der Anmeldung: 27.02.2013
(73) Patentinhaber: Siemens Aktiengesellschaft, 80333 München (DE)
(72) Erfinder: FRITZSCHE, Roland, 90475 Nürnberg (DE)
(86) Internationale Anmeldenummer: PCT/EP2011/055997
(87) Internationale Veröffentlichungsnummer: WO 2011/131577

(56) Entgegenhaltungen:
- EP-A1- 0 515 350
- EP-A1- 0 934 891
- EP-A1- 1 260 436
- EP-A2- 1 964 792
- WO-A1-98/47790
- WO-A1-2005/037689
- WO-A1-2010/022832

## Beschreibung

Die Erfindung betrifft eine Kommissionieranlage zum Kommissionieren von Packstücken gemäß dem Oberbegriff des Patentanspruchs 1 sowie ein Verfahren zum Kommissionieren von Packstücken nach dem Oberbegriff des Patentanspruchs 10.

Es sind bereits Kommissionieranlagen zum Kommissionieren von Packstücken bekannt, bei welchen die Packstücke nach ihrer Entnahme aus einem Lager, insbesondere einem Hochregallager, für eine gewisse Zeit in einer Puffereinrichtung gelagert werden und von dort gemäß einem vorliegenden Kommissionierauftrag zur Zusammenstellung einer Versandeinheit abgezogen werden. Die Puffereinrichtung ist als Hochregal ausgebildet, wobei die Packstücke einzeln oder lagenweise auf Paletten bzw. Tablaren liegend, in das Hochregal transportiert werden. Eine derartige Puffereinrichtung in der Form eines Hochregals fordert einen großen Bauraum innerhalb eines Distributionszentrums und ist kostenaufwendig. Herkömmlicherweise weisen Hochregale ein einheitliches Höhenraster auf, wobei in Bezug auf im Vergleich zum Höhenraster klein dimensionierte Packstücke der zur Verfügung stehende Pufferraum ineffizient benutzt wird. Außerdem wird die Puffereinrichtung entsprechend einer Spitzenauslastung der Kommissionieranlage dimensioniert, indem eine hohe Anzahl an Tablarstellplätzen (typischerweise zwischen 100.000 und 500.000 Stellplätze) vorgesehen wird. Ferner weisen die bekannten Puffereinrichtungen, um die Kommissionieraufgaben zu automatisieren, automatische Kleinteilelager (AKL) auf und/oder sie sind mit einer aufwändigen Fördertechnik, z.B. in der Form von sich zwischen den einzelnen Stellplätzen und einer Abgabestelle hin- und herbewegenden Trägern (so genannte "shuttles") ausgerüstet.

Um auftragsweise die Packstücke aus der Piffereinrichtung abzuziehen, wobei Packstücke zwischen Hochregalgassen ausgetauscht und/oder gemäß einem Kommissionierauftrag in einer bestimmten Reihenfolge sequenziert werden, muss eine aufwändige Steuerung vorgesehen sein. Um eine ungestörte Abwicklung der Kommissionieraufträge bei Ausfall eines Teils der Fördertechnik zu gewährleisten, müssen Packstücke aus Redundanzgründen mehrfach bevorratet werden.

Aus der EP 0 934 891 A1 ist eine Kommissionieranlage für Packstücke bekannt, bei der in einem (Regal-)Lager bereitgestellte Packstücke von dort entnommen und diese auf eine (Stetig-)Fördereranlage abgelegt werden. An einer Packstation werden die Packstücke der (Stetig-)Fördereranlage entnommen und (von der (Stetig-)Fördereranlage entnommen) dort verpackt. WO 2010/022832 offenbart ebenfalls eine Kommissionieranlage und ein Verfahren, die dem Oberbegriff der Ansprüche 1 und 10 entsprechen. Der Erfindung liegt die Aufgabe zugrunde, eine gattungsgemäße Kommissionieranlage mit einer Puffereinrichtung bereitzustellen, durch welche niedrige Herstellungs-, Betriebs- und Wartungskosten erreicht werden können.

Diese Aufgabe wird durch eine Kommissionieranlage gemäß dem Patentanspruch 1 und ein Verfahren nach dem Patentanspruch 10 gelöst.

Ausgehend von einer Kommissionieranlage zum Kommissionieren von Packstücken, mit einer Entnahmeeinrichtung zur Entnahme von Packstücken, die in einem Lager bereitgestellt sind, einer Puffereinrichtung, die zum Puffern der entnommenen Packstücke vorgesehen ist, und einer Abgabeeinrichtung, durch welche gepufferte Packstücke gemäß einem Kommissionierauftrag von der Puffereinrichtung abgezogen werden und einer die Packstücke behandelnden Bearbeitungseinheit zur Erledigung des Kommissionierauftrags abgegeben werden, wird vorgeschlagen, dass die Puffereinrichtung zumindest eine Sammelbahn aufweist, auf welcher die gepufferten Packstücke gesammelt werden. Dadurch kann vorteilhaft ein kompakter Aufbau der Puffereinrichtung erreicht werden. Insbesondere kann auf die aufwändige Bereitstellung von Einzelplätzen für die Packstücke, z.B. in der Form eines Hochregals, verzichtet werden. Unter einem "Packstück" soll insbesondere eine Einheit verstanden werden, die zumindest einen Versandgegenstand oder einen Satz von vorzugsweise identischen Versandgegenständen umschließt. Beispielsweise kann das Packstück als Handelsverpackungseinheit oder als Paket ausgebildet sein. Unter einem "Kommissionierauftrag" im Sinne der Erfindung soll insbesondere ein Auftrag verstanden werden, der eine Zusammenstellung von Packstücken zur Bildung einer oder mehrerer Versandeinheiten vorschreibt. Der Kommissionierauftrag schreibt vorzugsweise die Art, die Anzahl und/oder die Reihenfolge der die Versandeinheit bildenden Packstücke vor.

Die erfindungsgemäße Kommissionieranlage betrifft zweckmäßigerweise ein Verfahren, das vom Fachmann mit dem englischen Fachbegriff "Full Case Picking" bezeichnet wird und auf die Behandlung von Packstücken von einer Entnahme aus dem Lager bis zur Bereitstellung als Versandeinheit gerichtet ist.

Unter einer "Sammelbahn" soll insbesondere eine Vorrichtung verstanden werden, die zumindest eine Sammelfläche zur Aufnahme der gepufferten Packstücke und eine Fördereinheit aufweist, die die gepufferten Packstücke von einer mit der Entnahmeeinrichtung gebildeten Schnittstelle bis zu einer mit der Abgabeeinrichtung gebildeten Schnittstelle fördert. Durch diese doppelte Funktion der Sammelbahn als Puffereinrichtung und Fördereinheit kann der Einsatz von kostenaufwändigen Tablaren eingespart werden. Hierbei kann eine erhöhte Unabhängigkeit des Puffervorgangs von Art und Zustand der Verpackung erreicht werden. Ferner kann aufgrund der vorgeschlagenen Ausführung der Puffereinrichtung auf eine aufwändige Steuerung verzichtet werden, die für ein herkömmliches Abziehen von Packstücken aus Einzelplatzlagerungen notwendig ist. Die Sammelbahn kann als Fördereinheit insbesondere einen Gurtförderer aufweisen, wobei weitere Ausführungen, wie z.B. als Rutsche oder Rollenförderer, denkbar sind.

Nach der Entnahme aus dem Lager, das insbesondere dazu dient, die Packstücke in ihrem gelieferten Zustand, wie insbesondere in der Form von Paletten, zu lagern, bleiben die Packstücke während einer Pufferzeit in der Puffereinrichtung, die insbesondere von einer aktuellen Abwicklung von Kommissionieraufträgen durch die Bearbeitungseinheit abhängt. Hierdurch unterscheidet sich die Sammelbahn als Bestandteil einer Puffereinrichtung von einer einfachen Fördereinheit, deren Funktion lediglich darin besteht, Packstücke von einem ersten Punkt der Kommissionieranlage zu einem weiteren Punkt der Kommissionieranlage zu fördern. Die Dauer der Pufferung entspricht für zumindest einen Teil der in der Puffereinrichtung gepufferten Packstücke vorzugsweise zumindest der Zeit oder zumindest einem wesentlichen Teil der Zeit, die notwendig ist, um eine gewisse Anzahl an Packstücken auf der Sammelbahn zu sammeln. Die gepufferten Packstücke können über diese Zeit hinaus auf der Sammelbahn verbleiben, während weitere Packstücke von der Bearbeitungseinheit bearbeitet werden. Hierbei verbleiben die Packstücke auf der Sammelbahn bis sie, abhängig von der Abwicklung von Kommissionieraufträgen durch die Bearbeitungseinheit, von der Abgabeeinrichtung an die Bearbeitungseinheit zur Erledigung des ihnen zugeordneten Kommissionierauftrags abgegeben werden. Während zumindest eines Teils der Pufferzeit können die gepufferten Packstücke statisch, d.h. insbesondere in unbewegtem Zustand relativ zu einer Grundstruktur der Kommissionieranlage, auf der Sammelbahn gelagert werden.

Die Bearbeitungseinheit weist insbesondere zumindest eine Einheit auf, die anhand der aus der Sammelbahn abgezogenen Packstücke eine Versandeinheit zum Versand an den entsprechenden Auftraggeber des Kommissionierauftrags bereitstellt, wie z.B. eine Packstation. In dieser Einheit werden, z.B. nach dem so genannten Verfahren der Mischpalettierung, Versandeinheiten z.B. in der Form einer Palette, eines Rollwagens usw. zusammengestellt, wobei eine oder mehrere Versandeinheiten einem bestimmten Kommissionierauftrag entsprechen. Erfindungsgemäss fördert eine Fördereinheit die aus dem Lager entnommenen Packstücke auf die Sammelbahn ordnungsfrei. Hierdurch kann eine Pufferung mit einer hohen Dichte an Packstücken erreicht werden, wobei ein zur Verfügung stehender Pufferraum effizient benutzt werden kann. Unter einer "ordnungsfreien" Anordnung von Packstücken auf der Sammelbahn soll insbesondere eine Anordnung verstanden werden, bei welcher auf die Vorgabe einer bestimmten Ausrichtung bezüglich des Materialflusses, eines bestimmten Abstands zwischen zwei benachbarten Packstücken und/oder einer bestimmten Reihenfolge und auf entsprechende Mittel zur Bereitstellung einer bestimmten Ausrichtung, eines bestimmten Abstands und/oder einer bestimmten Reihenfolge verzichtet wird. In einer ordnungsfreien Anordnung von Packstücken weisen die Packstücke vorteilhafterweise eine beliebige Ausrichtung bezüglich des Materialflusses, eine beliebige Reihenfolge und/oder einen beliebigen Abstand zu benachbarten Packstücken auf. Die Sammelbahn ist hierbei in Bezug auf eine typische Dimensionierung der zu behandelnden Packstücke vorteilhafterweise derart ausgelegt, dass sie eine Aufnahme von sich in einer Richtung senkrecht zur Materialflussrichtung überlappenden Packstücken ermöglicht. Weist die Sammelbahn eine Fördereinheit mit einem steuerbaren Antrieb auf, kann in Verbindung mit Sensorik, visuellen Erkennungssystemen etc. eine hohe Packstückdichte auch bei großer Anzahl von Packstücken erreicht werden.

Außerdem wird vorgeschlagen, dass die Kommissionieranlage eine der Sammelbahn zugeordnete Vereinzelungseinrichtung als Bestandteil der Bearbeitungseinheit aufweist, die dazu dient, die aus der Sammelbahn abgezogenen Packstücke zu vereinzeln, wodurch eine effiziente Abwicklung von Kommissionieraufträgen durch die Bearbeitungseinheit erreicht werden kann. Unter einer "Vereinzelungseinrichtung" soll insbesondere eine Einrichtung verstanden werden, die dazu dient, einen Satz von Packstücken derart zu bearbeiten, dass die vereinzelten Packstücke entlang der Materialflussrichtung überwiegend, insbesondere ausschließlich hintereinander, vorzugsweise mit einem Abstand zwischen zwei benachbarten Packstücken, angeordnet sind. Dies eignet sich insbesondere bei einer ordnungsfreien Anordnung von Packstücken auf der Sammelbahn, bei welcher sich Packstücke in einer Richtung senkrecht zum Materialflussrichtung überlappen.

Ist die Puffereinrichtung dazu vorgesehen, die entnommenen Packstücke mit einer auf einen bestimmten Kommissionierauftrag bezogenen Zusammenstellung auf der Sammelbahn zu puffern, kann eine schnelle und effiziente Abwicklung des Kommissionierauftrags durch die Bearbeitungseinheit erfolgen. Hierbei werden auf der Sammelbahn Packstücke gepuffert, die vorteilhafterweise zumindest der Zusammenstellung einer Versandeinheit gemäß dem bestimmten Kommissionierauftrag bzw. der Versandeinheit entsprechen. Dies stellt insbesondere einen Vorteil gegenüber herkömmlichen Puffereinrichtungen dar, bei welchen Packstücke ohne Bezug auf einen bestimmten Kommissionierauftrag in Einzelplatzlagerungen gepuffert werden und erst durch Heranziehen einzelner Packstücke aus unterschiedlichen Einzelplatzlagerungen zur Herstellung einer Versandeinheit zusammengestellt werden. Die Sammelbahn in der vorgeschlagenen Ausführung kann durch den Begriff "Auftragssammelbahn" bezeichnet werden.

Ferner wird vorgeschlagen, dass die Kommissionieranlage zumindest eine Zeitsammelbahn aufweist, die in zumindest einem Betriebsmodus dazu dient, Packstücke aufzunehmen, um diese für eine Zuordnung zu einer späteren Abwicklung eines Kommissionierauftrags bereit zu stellen. Hierdurch kann ein Entnahmevorgang von Packstücken aus dem Lager besonders effizient erfolgen. Dieser kann insbesondere im Hinblick auf spätere Kommissionieraufträge, deren Abwicklung zu einem späteren Zeitpunkt fällig wird, durchgeführt werden. Ist ein erhöhter Bedarf an bestimmten Waren für ein späteres Zeitfenster vorgesehen, d.h. bezüglich Kommissionieraufträgen, deren Abwicklung erst zu einem späteren Zeitpunkt fällig wird, können größere Mengen an diesen Waren aus dem Lager entnommen werden, wobei Packstücke, die zur Abwicklung aktueller Kommissionieraufträge nicht benötigt werden, auf der Zeitsammelbahn bereit gestellt werden können. Die Zusammenstellung von Packstücken auf der Zeitsammelbahn ist, im Gegensatz zu einer Auftragssammelbahn, nicht durch einen bestimmten, aktuell abzuwickelnden Kommissionierauftrag vorgegeben. Die Zeitsammelbahn kann zusätzlich zur zumindest einen Sammelbahn der Puffereinrichtung vorgesehen sein. Alternativ kann sie der zumindest einen Sammelbahn der Puffereinrichtung entsprechen, wobei diese Sammelbahn bei Bedarf als Auftragssammelbahn oder als Zeitsammelbahn benutzt werden kann. Werden die Packstücke der Zeitsammelbahn(en) für abzuwickelnde Kommissionieraufträge benötigt, so werden die Packstücke nach entsprechender Vereinzelung auf die Auftragssammelbahnen sortiert.

In einer vorteilhaften Ausführung der Erfindung wird vorgeschlagen, dass die Kommissionieranlage eine der Sammelbahn zugeordnete Ausrichtungseinheit als Bestandteil der Bearbeitungseinheit aufweist, die zum Bewegen der aus der Sammelbahn abgezogenen Packstücke zum Erreichen einer Sollausrichtung bezüglich des Materialflusses vorgesehen ist, wodurch eine schnelle und effiziente Bearbeitung durch die Bearbeitungseinheit erreicht werden kann. Dies eignet sich insbesondere bei einer ordnungsfreien Anordnung von Packstücken auf der Sammelbahn, bei welcher die Packstücke ausrichtungsfrei, d.h. ohne vorgegebene Ausrichtung in Bezug auf den Materialfluss, angeordnet sind. Die Ausrichtungseinheit kann vorteilhaft einstückig mit einer Vereinzelungseinrichtung ausgebildet sein.

Ferner kann eine schnelle Bearbeitung von gepufferten Packstücken erreicht werden, wenn die Kommissionieranlage eine optische Erkennungseinheit als Bestandteil der Bearbeitungseinheit aufweist, die dazu vorgesehen ist, eine relative Position von Packstücken zueinander und/oder zu einer vorgegebenen Richtung, vorzugsweise zur Materialflussrichtung, zu erfassen. Die Erkennungseinheit kann vorteilhaft als Bestandteil einer Vereinzelungs- und/oder Ausrichtungseinheit ausgebildet sein.

Besonders vorteilhaft weist die Kommissionieranlage in einer weiteren Ausführung eine Sequenziereinrichtung als Bestandteil der Bearbeitungseinheit auf, die die aus der Sammelbahn abgezogenen Packstücke in einer Reihenfolge gemäß einem vorliegenden Kommissionierauftrag bereitstellt.

Gemäß einer Weiterbildung der Erfindung wird vorgeschlagen, dass die Puffereinrichtung einen Satz von Sammelbahnen aufweist, wodurch eine erhöhte Flexibilität in der Abwicklung von Kommissionieraufträgen erreicht werden kann. Besonders vorteilhaft ist eine entsprechende Ausführung der Erfindung, bei welcher Sammelbahnen des Satzes von Sammelbahnen in zumindest einem Betriebsmodus jeweils einem unterschiedlichen Kommissionierauftrag zugeordnet sind. Hierbei dienen diese Sammelbahnen vorteilhaft als Auftragssammelbahnen. Insbesondere können Packstücke aus einer Sammelbahn durch die Abgabeeinrichtung abgezogen werden, während eine Pufferung von Packstücken auf weiteren Sammelbahnen erfolgt, so dass die Bearbeitungseinheit weitestgehend kontinuierlich mit Packstücken gespeist werden kann. Sammelbahnen des Satzes von Sammelbahnen können flexibel auch als Zeitsammelbahn benutzt werden.

Es wird ferner vorgeschlagen, dass die Kommissionieranlage eine Sortiereinrichtung umfasst, die dazu dient, die aus dem Lager entnommenen Packstücke zur Pufferung in den entsprechenden Sammelbahnen zu sortieren. Hierdurch können vorteilhaft automatisch eine Zuordnung von Packstücken, die aus dem Lager entnommen wurden, zu einer bestimmten Sammelbahn und/oder ein automatisches Aufbringen von Packstücken auf die entsprechende Sammelbahn erfolgen. Die Sortiereinrichtung kann hierbei Sortiermittel aufweisen, die zu einem Ausschleusen von Packstücken dienen, wie z.B. Transfere,Pusher, Lifte, Quergurte, schuhartige Sortierelemente oder kippbare Sortierelemente, und mittels welcher die Packstücke auf die entsprechende Sammelbahn aufgebracht werden. Diese Sortiermittel weisen zweckmäßigerweise mindestens einen Antrieb auf, durch welchen die Packstücke auf die entsprechende Sammelbahn gefördert werden.

Ausführungsbeispiele der Erfindung werden nachfolgend anhand der Zeichnung beschrieben. Es zeigt:
- Figur 1: eine schematische Ansicht einer erfindungsgemäßen Kommissionieranlage mit einem Lager, einer Sortiereinrichtung, einer Puffereinrichtung umfassend Sammelbahnen und eine Bearbeitungseinheit, die eine Vereinzelungseinrichtung, eine Ausrichtungseinheit und eine Packstation aufweist,
- Figur 2: eine dreidimensionale Ansicht einer alternativen Kommissionieranlage und
- Figur 3: eine schematische Ansicht der Kommissionieranlage aus Figur 1 in einer alternativen Ausführung.

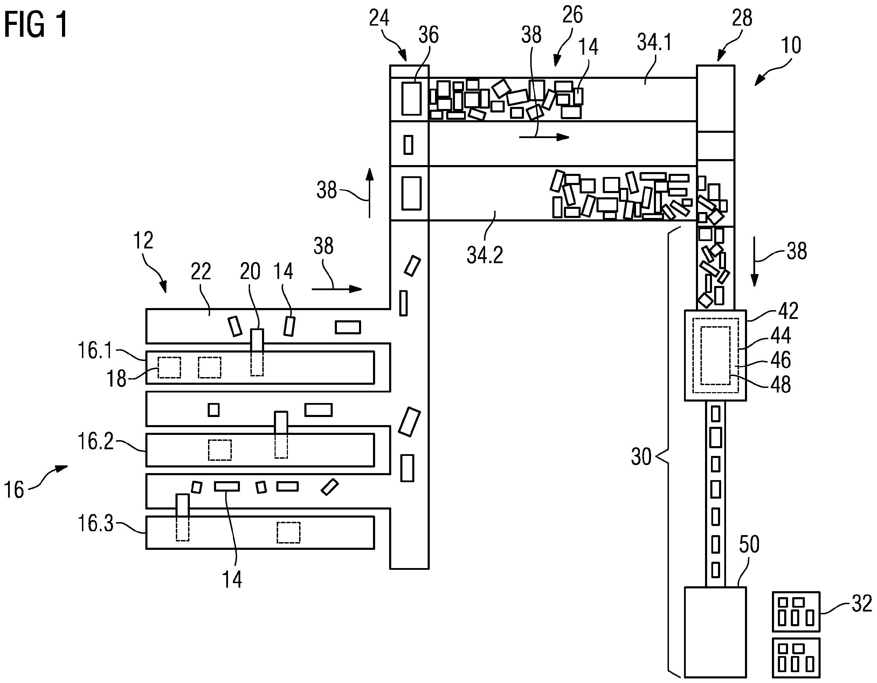

Figur 1 zeigt eine Kommissionieranlage 10 eines Distributions- oder Versandzentrums in einer schematischen Ansicht von oben. Diese weist eine Entnahmeeinrichtung 12 auf, die zur Entnahme von Packstücken 14 aus einem Lager 16 dient. Das Lager 16 ist als Hochregallager ausgebildet, das mehrere Regallagereinheiten 16.1, 16.2, 16.3 umfasst. In diesen werden die Packstücke 14 vorzugsweise unmittelbar nach ihrer Anlieferung an das Distributionszentrum eingelagert. Beispielweise sind im Lager 16 Paletten 18 gelagert, auf welchen die Packstücke 14 auf herkömmliche Weise gebündelt sind. Das Bezugszeichen 14 wird einheitlich zum Bezeichnen der einzelnen Packstücke verwendet, wobei sich die Packstücke 14 in ihrer Form, ihrem Gewicht, Verpackungsmaterial usw. voneinander unterscheiden können.

Die Entnahmeeinrichtung 12 umfasst Mittel 20 zum Depalettieren von Packstücken 14, d.h. zur Entnahme einzelner Packstücke 14 von den Paletten 18. Die Mittel 20 können zum automatischen, insbesondere vollautomatischen Depalettieren und/oder Platzieren der Packstücke 14 auf einen Förderer 22 dienen, was sich insbesondere für Packstücke 14 eignet, die zur Erledigung eines Kommissionierauftrags mit einer hohen Stückzahl pro Zeiteinheit benötigt werden. Für Packstücke 14, die mit einer niedrigeren Frequenz in der Herstellung von Kommissioniereinheiten benötigt werden und/oder nur mit hohem Aufwand von einer Palette entnehmbar sind, kann das Depalettieren manuell erfolgen. Hierbei können herkömmliche Methoden eingesetzt werden, wie beispielsweise eine licht- oder sprachunterstützte Methode ("Pick by Light" oder "Pick by Voice"), wobei die Packstücke 14 nach manueller Entnahme von einem Mitarbeiter auf den Förderer 22, z.B. einen Gurtförderer, gelegt bzw. gestellt werden (z.B. nach der sogenannten "Pick-to-Belt-Methode").

Die aus dem Lager 12 entnommenen Packstücke 14 werden mittels des Förderers 22 zu einer Sortiereinrichtung 24 befördert, in welcher sie gemäß einem bestimmten Kommissionierauftrag zum Zweck einer Pufferung in einer Puffereinrichtung 26 sortiert werden. Der Puffereinrichtung 26 ist entlang des Materialflusses eine Abgabeeinrichtung 28 nachgeschaltet, die für die Abwicklung eines Kommissionierauftrags benötigte Packstücke 14 aus der Puffereinrichtung 26 abzieht und einer Bearbeitungseinheit 30 abgibt, welche zur Erledigung des Kommissionierauftrags, und zwar insbesondere zur Bereitstellung einer Versandeinheit 32, z.B. in der Form einer Palette, dient.

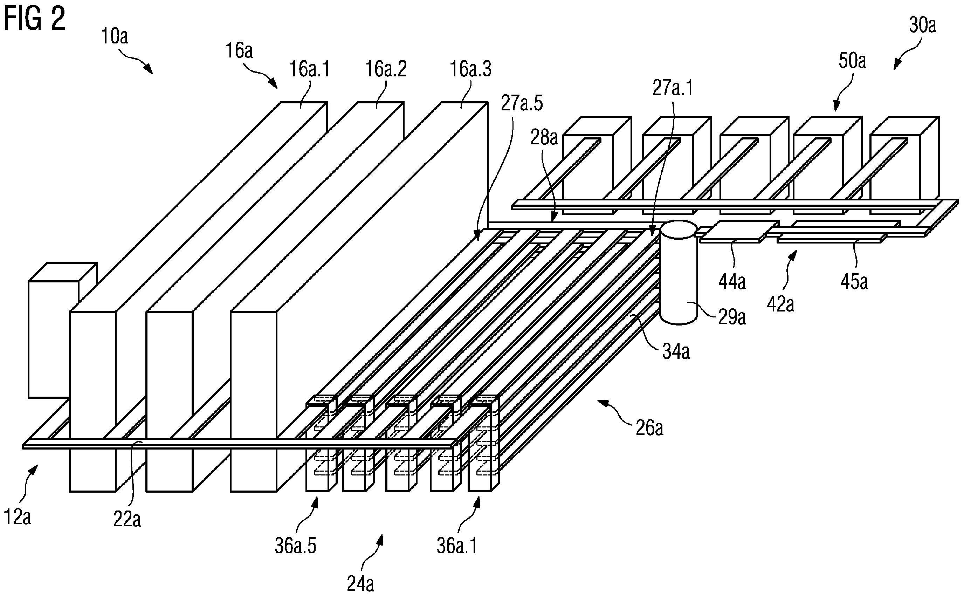

Die Puffereinrichtung 26 dient dazu, Packstücke 14 für eine gewisse, von einer aktuellen Abwicklung der Kommissionieraufträge durch die Bearbeitungseinheit 30 abhängigen Pufferzeit zwischen zu lagern. Sie weist erfindungsgemäß einen Satz von Sammelbahnen 34, wobei die Puffereinrichtung 26 eine beliebige Anzahl von Sammelbahnen 34 aufweisen kann (siehe Figur 2). Die vom Lager 16 entnommenen Packstücke 14 werden mittels der Sortiereinrichtung 24 sortiert, wobei sie jeweils einer Sammelbahn 34.1 oder 34.2 gemäß einem bestimmten Kommissionierauftrag zugeordnet werden. Zur Identifizierung der Packstücke 14 sind verschiedene Identifizierungsmittel denkbar, wie z.B. das Erfassen eines Barcodes, das Aktivieren eines am Packstück 14 angebrachten RFID-Chips und/oder eine optische Erkennung. Die Sortiereinrichtung 24 weist schematisch dargestellte Fördereinheiten 36 auf, die bezüglich des Materialflusses jeweils einer Sammelbahn 34 vorgeschaltet sind und dazu dienen, die aus dem Lager 16 entnommenen Packstücke 14 auf die entsprechende Sammelbahn 34.1 oder 34.2 zu fördern. Die Fördereinheiten 36 können z.B. als Transfere, Pusher, Lifte, Quergurtsorter, als Schuhsorter oder kippbare Sortiereinheiten ausgebildet sein. Hierbei werden die Packstücke 14 auf eine Sammelbahn 34 jeweils ordnungsfrei gefördert, wobei auf Mittel zum Festlegen einer vorgegebenen Ausrichtung und/oder eines vorgegebenen Abstands zwischen den einzelnen Packstücken 14, wie z.B. eine Vereinzelungs- und/oder Ausrichtungseinrichtung, verzichtet wird. Somit weisen die auf einer Sammelbahn 34 gesammelten Packstücke 14 unterschiedliche, beliebige Ausrichtungen relativ zur lokalen Materialflussrichtung 38 und unterschiedliche, beliebige Positionen relativ zueinander auf. Ferner sind die Sammelbahnen 34 derart dimensioniert, dass sich Packstücke 14 in einer Richtung senkrecht zur Materialflussrichtung 38 überlappen können. Anders formuliert können die Packstücke 14 bezüglich der Materialflussrichtung 38 nebeneinander angeordnet sein, so dass eine hohe Dichte an Packstücken 14 auf den Sammelbahnen 34 erreicht werden kann. Zum Erreichen einer zweckmäßigen Staudichte von Packstücken 14 auf den Sammelbahnen 34 können Antriebsparameter der Fördereinheiten 36 und/oder der Sammelbahnen 34, wie z.B. eine Fördergeschwindigkeit, gezielt eingestellt werden. Im betrachteten Ausführungsbeispiel sind die Sammelbahnen 34 als Gurtförderer ausgebildet, wobei weitere Ausführungen eines Fördermittels denkbar sind.

Im betrachteten Ausführungsbeispiel ist die Puffereinrichtung 26 dazu vorgesehen, die aus dem Lager 16 entnommenen Packstücke 14 abhängig von einem bestimmten Kommissionierauftrag auf einer Sammelbahn 34 zu puffern. Hierbei weisen die auf der Sammelbahn 34 gepufferten Packstücke 14 eine auf den bestimmten Kommissionierauftrag oder Auftrag für eine Versandeinheit bezogene Zusammenstellung auf. Hierzu sind die Sammelbahnen 34 jeweils einem bestimmten Kommissionierauftrag oder einem Auftrag für eine Versandeinheit zugeordnet und werden als Auftragssammelbahnen bezeichnet. Ist gemäß der Bearbeitungseinheit 30 die Erledigung des Kommissionierauftrags fällig und/oder sind sämtliche, für die Erledigung des Kommissionierauftrags notwendige Packstücke 14 auf der entsprechenden Sammelbahn 34 vorhanden, werden die entsprechenden Packstücke 14 aus der entsprechenden Sammelbahn 34 durch die Abgabeeinrichtung 28 abgezogen und der Bearbeitungseinheit 30 zur Erledigung des Kommissionierauftrags abgegeben. Das Abziehen der Packstücke 14 aus der Puffereinrichtung 26 erfolgt vorzugsweise automatisch, wobei ein manuelles Abziehen auch denkbar ist. Die abgezogenen Packstücke 14 werden zu einer Einheit 42 gefördert, die verschiedene Funktionen aufweisen kann. Die Einheit 42 umfasst zumindest eine Vereinzelungseinrichtung 44, die die ordnungsfrei, ggf. bezüglich der Materialflussrichtung 38 nebeneinander angeordneten Packstücke 14 vereinzelt. Ferner kann die Einheit 42, wie insbesondere im vorliegenden Ausführungsbeispiel, eine Ausrichtungseinheit 46 aufweisen, die die ausrichtungslosen Packstücke 14 zum Erreichen einer Sollausrichtung bezüglich der Materialflussrichtung 38 bewegt. Eine optische Erkennungseinheit 48 ist dazu vorgesehen, eine relative Position von Packstücken 14 zueinander und/oder zu einer vorgegebenen Richtung, insbesondere zur Materialflussrichtung 38, zu erfassen. Im betrachteten Ausführungsbeispiel sind die Vereinzelungseinrichtung 44 und die Ausrichtungseinheit 46 einstückig ausgebildet, wobei die Packstücke 14 durch ein und dieselbe Vorrichtung vereinzelt und ausgerichtet werden können. Ferner kann die Einheit 42 eine Sequenziereinheit aufweisen, die die Packstücke 14 gemäß einer bestimmten Sequenz sortiert. Diese Sequenz kann vom Gewicht, von der Form und/oder von weiteren externen Merkmalen der Packstücke 14 und/oder von einer vom Auftraggeber bestimmten Reihenfolge abhängen. Die Anzahl der durch die Einheit 42 zu erledigenden Funktionen ist von der Art der Packstücke 14 und/oder von dem aktuellen Kommissionierauftrag, beispielsweise von spezifischen Anforderungen des Auftragsgebers abhängig.

Nach der Bearbeitung durch die Einheit 42 werden die nunmehr vereinzelten und ggf. nach Art, Gewicht, Form usw. sortierten, ausgerichteten und/oder sequenzierten Packstücke 14 zu einer Packstation 50 gefördert, um dort manuell und/oder automatisch auf einen Träger, wie z.B. eine Palette oder in einen Rollwagen, als eine Versandeinheit 32 gepackt zu werden.

Bezüglich der Materialflussrichtung 38 sind die Entnahmeeinrichtung 12, die Sortiereinrichtung 24, die Puffereinrichtung 26 mit den Sammelbahnen 34, die Abgabeeinrichtung 28 und die Bearbeitungseinheit 30 mit der Vereinzelungseinrichtung 44, der Ausrichtungseinheit 46, ggf. einer Sequenziereinrichtung, und der Packstation 50 hintereinander, ggf. direkt hintereinander angeordnet.

Eine weitere Ausführung einer Kommissionieranlage 10a ist in Figur 2 gezeigt. Die folgende Beschreibung ist, um Wiederholungen zu vermeiden, im Wesentlichen auf die Unterschiede zu dem Ausführungsbeispiel der Figur 1 gerichtet. Bauteile oder Funktionseinheiten, die in ihrem Aufbau und/oder Funktionen oben schon beschrieben wurden, werden der Übersichtlichkeit halber mit dem gleichen Bezugszeichen bezeichnet, wobei der Buchstaben "a" zur Unterscheidung hinzugefügt wird.

In Figur 2 ist eine dreidimensionale Ansicht der Kommissionieranlage 10a dargestellt. Diese weist eine Entnahmeeinrichtung 12a auf, durch welche Packstücke 14 aus einem Hochregallager 16a mit mehreren Regallagereinheiten 16a.1 bis 16a.3 entnommen werden. Die entnommenen Packstücke 14 werden mittels eines Förderers 22a zu einer Puffereinrichtung 26a gefördert. Diese weist mehrere Sätze 27a.1 bis 27a.5 von Sammelbahnen 34a auf, die bezüglich der Materialflussrichtung 38a nebeneinander angeordnet sind. Jeder Satz 27a umfasst mehrere Sammelbahnen 34a auf, die übereinander angeordnet sind. Zum Sortieren der Packstücke 14 in die entsprechenden Sammelbahnen 34a ist eine Sortiereinrichtung 24a vorgesehen, die für jeden Satz 27a eine als Aufzugseinrichtung ausgebildete Fördereinheit 36a zum ordnungsfreien Einspeisen der Packstücke 14 in die betreffenden Niveaus aufweist.

Der Puffereinrichtung 26a ist eine Abgabeeinrichtung 28a nachgeschaltet, die die gepufferten Packstücke 14 von der Puffereinrichtung 26a abzieht und einer Bearbeitungseinheit 30a zur Erledigung eines bestimmten Kommissionierauftrags abgibt. Die Abgabeeinrichtung 28a weist einen Spiralförderer 29a auf, mittels dessen Packstücke 14 von einer Sammelbahn 34a auf das Niveau der Bearbeitungseinheit 30a transportiert werden. Nach dem Abziehen aus einer Sammelbahn 34a werden die Packstücke 14 zu einer Einheit 42a der Bearbeitungseinheit 30a gefördert. Die Einheit 42a weist eine Vereinzelungseinrichtung 44a und eine Sequenziereinrichtung 45a auf, durch welche die Packstücke 14 gemäß einer durch das Gewicht, die Form, die Art der Packstücke 14 und/oder bestimmte Anforderungen des Auftraggebers bedingten Reihenfolge verarbeitet werden. Vor dem Sequenzieren werden die Packstücke 14 von der Vereinzelungseinrichtung 44a vereinzelt. Von der Einheit 42a werden die Packstücke 14 zu einer Packstation 50a gefördert, mittels welcher Versandeinheiten 32 (nicht gezeigt) bereitgestellt werden.

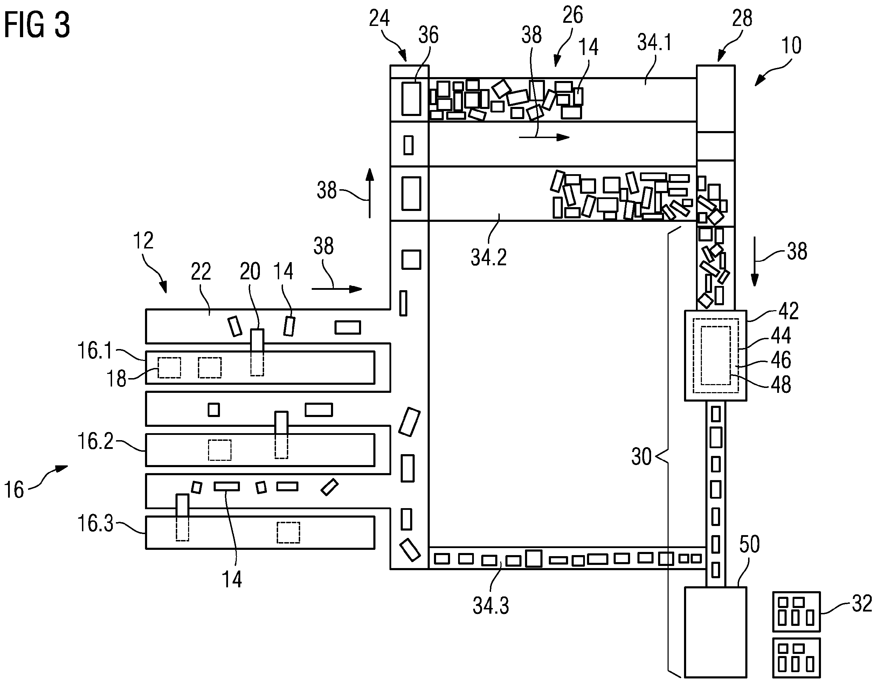

Figur 3 zeigt die Kommissionieranlage 10 aus Figur 1 in einer alternativen Ausführung. Die folgende Beschreibung bezieht sich lediglich auf die Unterschiede zum oben beschriebenen Ausführungsbeispiel und es wird auf die bereits ausgeführten Erläuterungen verwiesen.

Die Kommissionieranlage 10 weist eine Zeitsammelbahn 34.2 auf. Diese dient dazu, Packstücke 14 zu puffern, bevor diese einer späteren Abwicklung eines Kommissionierauftrags zugeordnet werden. Die Funktion der Zeitsammelbahn 34.2 wird anhand des folgenden Beispiels erläutert. Bei der fälligen Abwicklung eines bestimmten Kommissionierauftrags werden mit Hilfe der Mittel 20 Packstücke 14 depalettiert und auf den Förderer 22 platziert. Dies betrifft Packstücke 14, die, wie oben ausgeführt, auf eine entsprechende Auftragssammelbahn 34.1 gemäß einer auf den bestimmten Kommissionierauftrag bezogenen Soll-Zusammenstellung befördert werden. Um den Depalettiervorgang zu optimieren, können ferner weitere, für den bestimmten, aktuell abzuwickelnden Kommissionierauftrag nicht erforderliche Packstücke 14 depalettiert werden, indem z.B. eine komplette Palettenlage oder eine komplette Palette bearbeitet wird. Die zusätzlichen, dem aktuell abzuwickelnden Kommissionierauftrag nicht zugeordneten Packstücke 14 werden auf der Zeitsammelbahn 34.2 bereitgestellt, bis sie einem Kommissionierauftrag, dessen Abwicklung zu einem späteren Zeitpunkt fällig wird, zugeordnet werden, und dementsprechend auf eine diesem Kommissionierauftrag zugeordnete Auftragssammelbahn 34.1 transportiert werden.

## Patentansprüche

1. Kommissionieranlage zum Kommissionieren von Packstücken (14), mit einer Entnahmeeinrichtung (12; 12a) zur Entnahme von Packstücken (14), die in einem Lager (16; 16a) bereitgestellt sind, einer Puffereinrichtung (26; 26a), die zum Puffern der entnommenen Packstücke (14) vorgesehen ist, und einer Abgabeeinrichtung (28; 28a), durch welche gepufferte Packstücke (14) gemäß einem Kommissionierauftrag von der Puffereinrichtung (26; 26a) abgezogen werden und einer die Packstücke (14) verarbeitenden Bearbeitungseinheit (30; 30a) zur Erledigung des Kommissionierauftrags abgegeben werden, wobei die Puffereinrichtung (26; 26a) einen Satz von Sammelbahnen (34; 34a) aufweist, auf welchen die gepufferten Packstücke (14) gemäß einem bestimmten Kommissionierauftrag sammelbar sind. **dadurch gekennzeichnet, dass** eine Fördereinheit (36; 36a), die die aus dem Lager (12; 12a) entnommenen Packstücke (14) auf die Sammelbahn (34; 34a) ordnungsfrei fördert.

2. Kommissionieranlage nach Anspruch 1, **gekennzeichnet durch** eine der Sammelbahn (34) zugeordnete Vereinzelungseinrichtung (44) als Bestandteil der Bearbeitungseinheit (30), die dazu dient, die aus der Sammelbahn (34) abgezogenen Packstücke (14) zu vereinzeln.

3. Kommissionieranlage nach einem der vorhergehenden Ansprüche, **dadurch gekennzeichnet, dass** die Puffereinrichtung (26; 26a) dazu vorgesehen ist, die entnommenen Packstücke (14) mit einer auf einen bestimmten Kommissionierauftrag bezogenen Zusammenstellung auf der Sammelbahn (34; 34a) zu puffern.

4. Kommissionieranlage nach einem der vorhergehenden Ansprüche, **gekennzeichnet durch** zumindest eine Zeitsammelbahn (34.2), die in zumindest einem Betriebsmodus dazu dient, Packstücke (14) aufzunehmen, um diese für eine Zuordnung zu einer späteren Abwicklung eines Kommissionierauftrags bereit zu stellen.

5. Kommissionieranlage nach einem der vorhergehenden Ansprüche, **gekennzeichnet durch** eine der Sammelbahn (34) zugeordnete Ausrichtungseinheit (46) als Bestandteil der Bearbeitungseinheit (30), die zum Bewegen der aus der Sammelbahn (34) abgezogenen Packstücke (14) zum Erreichen einer Sollausrichtung bezüglich des Materialflusses vorgesehen ist.

6. Kommissionieranlage nach einem der vorhergehenden Ansprüche, **gekennzeichnet durch** eine optische Erkennungseinheit (48) als Bestandteil der Bearbeitungseinheit (30), die dazu vorgesehen ist, eine relative Position von Packstücken (14) zueinander und/oder zu einer vorgegebenen Richtung (38) zu erfassen.

7. Kommissionieranlage nach einem der vorhergehenden Ansprüche, **gekennzeichnet durch** eine Sequenziereinrichtung (45a) als Bestandteil der Bearbeitungseinheit (30a), die die aus der Sammelbahn (34a) abgezogenen Packstücke (14) in einer Reihenfolge gemäß einem bestimmten Kommissionierauftrag bereitstellt.

8. Kommissionieranlage nach einem der vorhergehenden Ansprüche, **dadurch gekennzeichnet, dass** bestimmte Sammelbahnen (34; 34a) des Satzes von Sammelbahnen in zumindest einem Betriebsmodus jeweils mindestens einem von mehreren unterschiedlichen Kommissionieraufträgen zugeordnet sind.

9. Kommissionieranlage nach einem der vorhergehenden Ansprüche, **gekennzeichnet durch** eine Sortiereinrichtung (24; 24a), die dazu dient, die aus dem Lager (12; 12a) entnommenen Packstücke (14) zur Pufferung in den entsprechenden Sammelbahnen (34; 34a) zu sortieren.

10. Verfahren zum Kommissionieren von Packstücken (14), bei welchem
- Packstücke (14) aus einem Lager (12; 12a) entnommen werden,
- die entnommenen Packstücke (14) in einer Puffereinrichtung (26; 26a) gepuffert werden,
- die gepufferten Packstücke (14) gemäß einem bestimmten Kommissionierauftrag aus der Puffereinrichtung (26; 26a) abgezogen werden und
- die abgezogenen Packstücke (14) zur Erledigung des Kommissionierauftrags verarbeitet werden, wobei die aus dem Lager (12; 12a) entnommenen Packstücke (14) auf einer Sammelbahn (34; 34a) eines Satzes von Sammelbahnen (34, 34a) der Puffereinrichtung (26; 26a) gemäß dem bestimmten Kommissionierauftrag gesammelt werden. **dadurch gekennzeichnet, dass** die Packstücke (14) auf der Sammelbahn (34; 34a) ordnungsfrei gesammelt werden.

11. Verfahren nach Anspruch 10, **dadurch gekennzeichnet, dass** die aus der Puffereinrichtung (26) abgezogenen Packstücke (14) zur Erledigung des Kommissionierauftrags vereinzelt werden.

## Claims

1. Loading system for loading packaged items (14), with a removal device (12; 12) for removing packaged items (14) which are made available in a storage facility (16; 16a), a buffer device (26; 26a) which is provided to buffer the removed packaged items (14), and a dispensing device (28; 28a), by means of which buffered packaged items (14) are drawn from the buffer device (26; 26a) in accordance with a loading request and a processing unit (30; 30a) processing the packaged items (14) in order to complete the loading request, wherein the buffer device (26; 26a) has a set of collecting conveyors (34; 34a), on which the buffered packaged items (14) can be collected in accordance with a specific loading request, **characterised in that** a conveyor unit (36; 36a), which conveys the packaged items (14) removed from the storage facility (12; 12a) with no order on the collecting conveyor (34; 34a).

2. Loading system according to claim 1, **characterised by** a separation device (44) assigned to the collecting conveyor (34) as an integral part of the processing unit (30), which serves to separate the packaged items (14) drawn from the collecting conveyor (34).

3. Loading system according to one of the preceding claims, **characterised in that** the buffer device (26; 26a) is provided to buffer the removed packaged items (14) with a combination based on a specific loading request on the collecting conveyor (34; 34a).

4. Loading system according to one of the preceding claims, **characterized by** at least one time collecting conveyor (34.2), which, in at least one operating mode, serves to receive packaged items (14), in order to make these available for an assignment to a subsequent execution of a loading request.

5. Loading system according to one of the preceding claims, **characterised by** an alignment unit (46) assigned to the collecting conveyor (34) as an integral part of the processing unit (30), which is provided to move the packaged items (14) drawn from the collecting conveyor (34) in order to achieve a target alignment in respect of the material flow.

6. Loading system according to one of the preceding claims, **characterised by** an optical detection unit (48) as an integral part of the processing unit (30), which is provided to detect a relative position of packaged items (14) in relation to one another and/or in relation to a predetermined direction (38).

7. Loading system according to one of the preceding claims, **characterised by** a sequencing device (45a) as an integral part of the processing unit (30a), which makes available the packaged items (14) drawn from the collecting conveyor (34a) in a sequence in accordance with a specific loading request.

8. Loading system according to one of the preceding claims, **characterised in that** in at least one operating mode, specific collecting conveyors (34; 34a) of the set of collecting conveyors are assigned to at least one of a number of different loading requests in each case.

9. Loading system according to one of the preceding claims, **characterised by** a sorting device (24; 24a), which serves to sort the packaged items (14) removed from the storage facility (12; 12a) for buffering in the corresponding collecting conveyors (34, 34a).

10. Method for loading packaged items (14), in which
- packaged items (14) are removed from a storage facility (12; 12a),
- the removed packaged items (14) are buffered in a buffer device (26; 26a),
- the buffered packaged items (14) are drawn from the buffer device (26; 26a) in accordance with a specific loading request and
- the drawn packaged items (14) are processed in order to complete the loading request,
wherein the packaged items (14) removed from the storage facility (12; 12a) are collected on a collecting conveyor (34, 34a) of a set of collecting conveyors (34, 34a) of the buffer device (26; 26a) in accordance with the specific loading request,
**characterised in that** the packaged items (14) are collected with no order on the collecting conveyor (34; 34a).

11. Method according to claim 10,
**characterised in that** the packaged items (14) drawn from the buffer device (26) are separated in order to complete the loading request.

## Revendications

1. Installation de préparation de commandes destinée à la préparation de commandes de colis (14), avec un dispositif de prélèvement (12 ; 12a) destiné au prélèvement de colis (14) qui sont mis à disposition dans un entrepôt (16 ; 16a), un dispositif de stockage à court terme (26 ; 26a) qui est prévu pour stocker à court terme les colis (14) prélevés, et un dispositif de distribution (28 ; 28a), par le biais duquel des colis (14) stockés à court terme sont enlevés par le dispositif de stockage à court terme (26 ; 26a) selon un ordre de préparation de commandes et sont distribués à une unité de traitement (30 ; 30a) traitant les colis (14) en vue de l'exécution de l'ordre de préparation de commande, dans laquelle le dispositif de stockage à court terme (26 ; 26a) présente un ensemble de voies de collecte (34 ; 34a) sur lesquelles les colis (14) stockés à court terme peuvent être collectés selon un ordre de préparation de commandes défini
**caractérisé par**
un dispositif de transport (36 ;36a) qui transporte sans ordre les colis (14) prélevés de l'entrepôt (12) sur la voie de collecte (34 ; 34a).

2. Installation de préparation de commandes selon la revendication 1, **caractérisée par** un dispositif de séparation (44) associé à la voie de collecte (34) en tant que composant de l'unité de traitement (30) qui sert à séparer les colis (14) enlevés de la voie de collecte (34).

3. Installation de préparation de commandes selon l'une des revendications précédentes, **caractérisée en ce que** le dispositif de stockage à court terme (26 ; 26a) est prévu pour stocker à court terme sur la voie de collecte (34 ; 34a) les colis (14) prélevés avec un assortiment relatif à un ordre de préparation de commandes défini.

4. Installation de préparation de commandes selon l'une des revendications précédentes, **caractérisée par** au moins une voie de collecte à long terme (34.2) qui sert dans au moins un mode de fonctionnement à recevoir des colis (14) pour les préparer en vue d'une association lors d'une réalisation ultérieure d'un ordre de préparation de commandes.

5. Installation de préparation de commandes selon l'une des revendications précédentes, **caractérisée par** une unité d'orientation (46) associée à la voie de collecte (34) en tant que composant de l'unité de traitement (30), qui est prévue pour le déplacement des colis (14) enlevés de la voie de collecte (34) en vue d'atteindre une orientation théorique en ce qui concerne le flux de matériaux.

6. Installation de préparation de commandes selon l'une des revendications précédentes, **caractérisée par** une unité de reconnaissance optique (48) en tant que composant de l'unité de traitement (30) qui est prévue pour détecter une position relative des colis (14) les uns par rapport aux autres et/ou par rapport à une direction prédéterminée (38).

7. Installation de préparation de commandes selon l'une des revendications précédentes, **caractérisée par** un dispositif de séquençage (45a) en tant que composant de l'unité de traitement (30a), qui met à disposition les colis (14) enlevés de la voie de collecte (34a) dans une suite selon un ordre de préparation de commandes défini.

8. Installation de préparation de commandes selon l'une des revendications précédentes, **caractérisée en ce que** des voies de collecte (34 ; 34a) définies de l'ensemble de voies de collecte sont associées dans au moins un mode de fonctionnement respectivement à au moins l'un parmi plusieurs ordres de préparation de commandes différents.

9. Installation de préparation de commandes selon l'une des revendications précédentes, **caractérisée par** un dispositif de tri (24 ; 24a) qui sert à trier les colis (14) prélevés dans l'entrepôt (12 ; 12a) en vue de les stocker à court terme dans les voies de collecte (34 ; 34a) correspondantes.

10. Procédé destiné à la préparation de commandes de colis (14), dans lequel
- des colis (14) sont prélevés dans un entrepôt (12 ; 12a),
- les colis (14) prélevés sont stockés à court terme dans un dispositif de stockage à court terme (26 ; 26a),
- les colis (14) stockés à court terme sont enlevés du dispositif de stockage à court terme (26 ; 26a) selon un ordre de préparation de commandes défini et
- les colis (14) prélevés sont traités en vue de l'exécution de l'ordre de préparation de commandes,
dans lequel les colis (14) prélevés dans l'entrepôt (12 ; 12a) sont collectés sur une voie de collecte (34 ; 34a) d'un ensemble de voies de collecte (34, 34a) du dispositif de stockage à court terme (26 ; 26a) selon l'ordre de préparation de commandes défini
**caractérisé en ce que** les colis (14) sont collectés sans ordre sur la voie de collecte (34 ; 34a).

11. Procédé selon la revendication 10, **caractérisé en ce que** les colis (14) prélevés dans le dispositif de stockage à court terme (26) sont séparés en vue de l'exécution de l'ordre de préparation de commandes.
